# EUROPÄISCHE PATENTSCHRIFT

(11) **EP 1 288 525 B1**
(45) Veröffentlichungstag und Bekanntmachung des Hinweises auf die Patenterteilung: **14.09.2005**
(21) Anmeldenummer: 02016015.6
(22) Anmeldetag: 18.07.2002
(51) Int. Cl.: F16F 9/02, A47C 1/024

(54) **Auslöseeinrichtung für ein blockierbares Kolben-Zylinderaggregat**
Release mechanism for a blockable piston-cylinder-aggregate
Mécanisme de déclenchement pour un agrégat à piston-cylindre blocable

(30) Priorität: 03.09.2001 DE 10142884
(43) Veröffentlichungstag der Anmeldung: 05.03.2003
(73) Patentinhaber: Stabilus GmbH, D-56070 Koblenz (DE)
(72) Erfinder: Knopp, Axel, 56337 Eitelborn (DE)
(74) Vertreter: Klein, Thomas

(56) Entgegenhaltungen:
- WO-A-96/15390
- DE-A- 3 738 298
- DE-A- 19 528 649
- DE-B- 1 288 263
- US-A- 5 404 972

## Beschreibung

Die Erfindung betrifft eine blockierbare Gasfeder, insbesondere eine willkürlich blokierbare Gasfeder nach dem Oberbegriff von Patentanspruch 1.

Blockierbare Gasfeder werden u. a. bei Stühlen eingesetzt, die eine Rückenlehne aufweisen, die einerseits federnd gelagert und andererseits über die Blockierfunktion der Gasfeder starr gehalten werden können. Ein Stuhlbenutzer sitzt aber nicht ständig mit derselben Körperhaltung auf dem Stuhl. Mit der Auslöseeinrichtung kann die Rückenlehnenposition sehr leicht der momentanen Sitzposition angepasst werden. Dabei kann z. B. der Fall auftreten, dass die Person nach vorn gebeugt sitzt und die Rückenlehne keinen Kontakt zum Rücken der Person hält. Wird die Auslöseeinrichtung für die Gasfeder an der Rückenlehne betätigt, so wird die Rückenlehne von der Gasfeder in Richtung des Rückens beschleunigt und trifft auf diesen auf. Dieses Betriebsverhalten kann als unangenehm empfun-den werden. Bereits vor geraumer Zeit hat man in der DE 69 35 911 U1 eine Gasfeder beschrieben, die einen geteilten Auslösestößel aufweist, wobei zwischen den beiden Auslösestößel-Abschnitten eine Feder angeordnet ist. Mit der Feder wird ein langsameres Öffnen des Blockierventils innerhalb der Gasfeder erreicht.

Ein ähnlicher Weg ist in der DE 36 1 5 688 A1 beschrieben. Über den Hubweg des Auslösestößels verändert sich der Ventilquerschnitt. Die damit verbundene Drosselung lässt die Kolbenstange nur langsam und dann zunehmend schneller ausfahren. Mit beiden Gasfedertypen wird ein unangenehmes Anschlagen der Rückenlehne zwar abgeschwächt, jedoch keinesfalls zuverlässig verhindert.

Die DE 195 28 649 A1 betrifft eine Auslöseeinrichtung, die zwei Schalteingänge aufweist. Zum einen kann über einen Bowdenzug der Auslösestößel angesteuert werden. Zusätzlich steht der Sitzträger ebenfalls mit der Auslöseinrichtung in der Form in Wirkverbindung, so dass bei einem entlasteten Sitzträger unabhängig von dem Schaltzustand des Bowdenzuges an der Gasfeder stets die unblockierte Betriebsfunktion eingenommen wird. Dazu dient eine als Wippe ausgeführte Auslösevorrichtung, die direkt auf den Auslösestößel einwirkt. Wesentlich ist, dass die Sitzplatte für die Erfassung des Belastungszustandes eine Schwenkbewegung durchführen können muss. Damit ist wiederum eine eingeschränkte Stuhlkonstruktion verbunden. Komfortable Stühle verfügen häufig über eine Sitzneigungsverstellung. Eine derartige Sitzneigungsverstellung hätte einen erheblichen Einfluss auf die Funktion der Auslöseeinrichtung.

Aus der WO 96/15390 ist ein Schwingungsdämpfer für Fahrzeuge bekannt, der einen Zylinder aufweist, welcher von einem Kolben an einer Kolbenstange in zwei Arbeitsräume unterteilt ist. Die Arbeitsräume sind mit einem Medium gefüllt, das bei nicht belastetem Dämpfer nicht unter Druck steht. Die beiden Arbeitsräume sind durch ein Strömungsverbindungssystem miteinander verbindbar, das in Abhängigkeit von der Stellung eines schaltbaren Ventils öffnet. Weiterhin ist ein Lastschaltventil vorhanden, durch das die beiden Arbeitsräume bei einem erhöhten Druck in der der Kolbenstange abgewandten Arbeitskammer miteinander verbunden werden.

Weiterhin ist aus der DE 37 38 298 A1 eine Gasdruckfeder nach dem Oberbegriff des Anspruchs 1 bekannt, deren beide Arbeitsräume über ein schaltbares Ventil miteinander verbindbar sind.

Aufgabe der vorliegenden Erfindung ist es, bei einer Gasfeder, eine hubunabhängige gebremste Betriebsbewegung zu erreichen.

Erfindungsgemäß wird die Aufgabe durch die Merkmale des Anspruchs 1 gelöst, welche das Merkmal umfassen, dass in dem Strömungsverbindungssystem in Reihe zum schaltbaren Ventil ein Lastschaltventil angeordnet ist, das unterhalb einer definierten Belastung auf die Gasfeder das gesamte Strömungsverbindungssystem unabhängig von der Schaltstellung des schaltbaren Ventils blockiert.

Mit dem Lastschaltventil wird bei dem Beispiel aus der Beschreibungseinleitung"sensiert", ob die Person eine zumindest geringe Last auf die Rückenlehne ausübt. Wird die Last aufgebracht, dann kann der Fall ausgeschlossen werden, dass die Rückenlehne unkontrolliert anschlägt, wenn das schaltbare Ventil betätigt wird.

Für die "Sensierung" weist das Lastschaltventil einen Steuerdruckanschluss zu einem Arbeitsraum auf. Als Bezugsgröße dient eine Gegenkraft, die beispielsweise von einer Feder aufgebracht wird.

Alternativ kann das Lastschaltventil für jeden der beiden Arbeitsräume einen Steuerdruckanschluss aufweisen, wobei die Steuerdrücke entgegengesetzt gerichtet sind. Der Vorteil dieser Ausgestaltung besteht darin, dass bei einem Kolben-Zylinderaggregat in der Bauform einer Gasfeder das Temperaturverhalten der Gasfüllung bezogen auf die erfindungsgemäße Funktion kompensiert ist.

Ein ganz wesentlicher Vorteil wird dadurch erreicht, dass das Lastschaltventil und das schaltbare Ventile zu einer Baueinheit zusammengefasst sind. Man erhält bezogen auf das Kolben-Zylinderaggregat eine innenliegende Lösung, die einerseits einen einfachen Aufbau und andererseits eine völlige Designfreiheit für die vorgesehene Anwendung bedeuten.

Dabei kann man vorsehen, dass ein Strömungskanal des schaltbaren Ventils als Abschnitt des Strömungsverbindungssystems am Steuerdruckanschluss des Lastschaltventils mündet.

Alternativ besteht die Möglichkeit, dass das Lastschaltventil in der Bauform eines Rückschlagventils ausgeführt ist. Damit kann der funktionale Aufbau des Lastschaltventils besonderes einfach gehalten werden.

Im Hinblick auf einen raumsparenden und kostengünstigen Aufbau weist das schaltbare Ventil ein Ventilelement auf, das an seinen beiden Steuerdruckseiten jeweils von einem Betriebsdruck eines Arbeitsraums beaufschlagt wird.

Gemäß einem Unteranspruch wird das Ventilelement von einer Dichtung gebildet.

Im Hinblick auf eine gezielte Rückstellkraft des Ventilelementes ist die Dichtung zumindest auf einem Umfangsabschnitt axial beweglich ausgeführt.

Anhand der folgenden Figurenbeschreibung soll die Erfindung näher erläutert werden.

Es zeigt:
- Fig. 1: Beispielhafte Einbausituation für die erfindungsgemäße Gasfeder
- Fig. 2: Prinzipdarstellung des Kolben-Zylinderaggregates in der Bauform einer Gasfeder
- Fig. 3 u. 4: Ersatzschaubilder des Kolben-Zylinderaggregates in der Bauform einer Gasfeder
- Fig. 5 -8: Schnittdarstellungen einer Variante des Kolben-Zylinderaggregates in der Bauform einer Gasfeder
- Fig. 9: Weitere Ausführungsformen

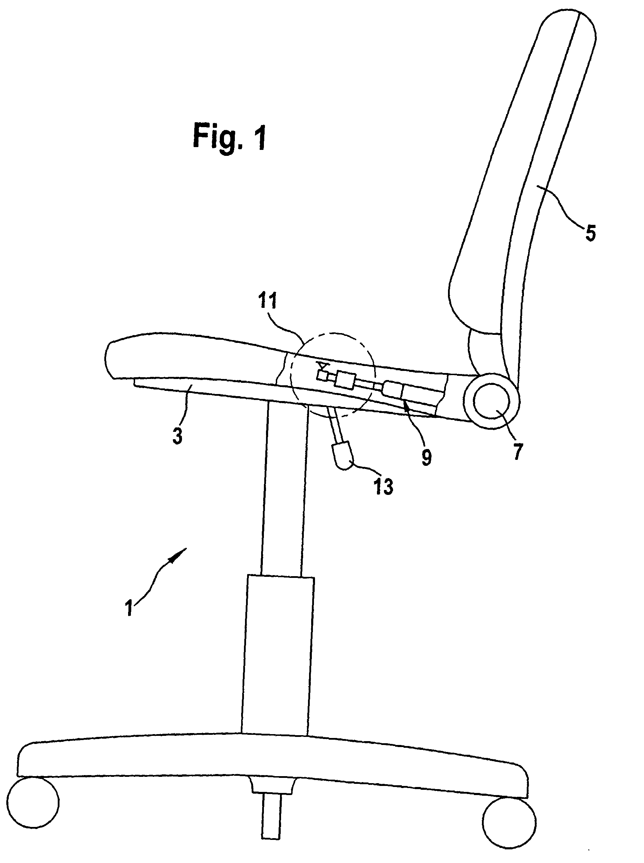

Die Figur 1 zeigt einen Stuhl 1, an dessen Sitzträger 3 eine Rückenlehne 5 um ein Lager 7 schwenkbeweglich gelagert ist. Funktional zwischen der Rückenlehne 5 und dem Sitzträger 3 ist ein Kolben-Zylinderaggregat 9 in der Bauform einer Gasfeder angeordnet. Die Gasfeder 9 kann über eine Auslöseeinrichtung 11, von der nur ein Betätigungshebel 13 dargestellt ist, in eine Blockier- oder eine Freigangstellung geschaltet werden.

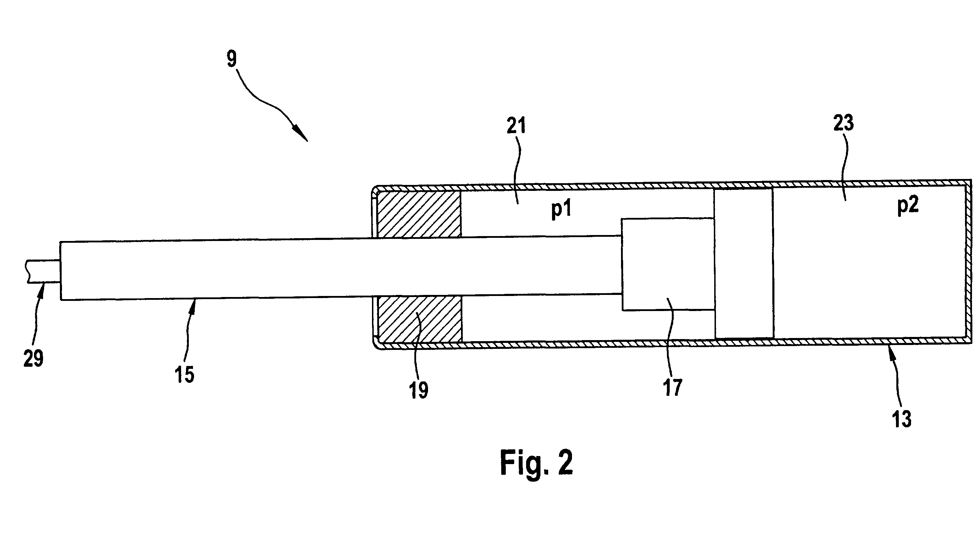

In der Fig. 2 ist die Gasfeder 9 in einer Prinzipdarstellung abgebildet. Innerhalb eines Zylinders 13 ist eine Kolbenstange 15 mit einem Kolben 17 axial beweglich angeordnet. Eine Kolbenstangenführung 19 verschließt den Zylinder, so dass der Zylinder in einen kolbenstangenseitigen und einen kolbenstangenfernen Arbeitsraum 21; 23 unterteilt wird, wobei beide Arbeitsräume mit einem Druckmedium, in der Regel Gas, gefüllt sind. Selbstverständlich kann man auch eine hydraulische Füllung vornehmen und diese Füllung unter eine Druckvorspannung setzen.

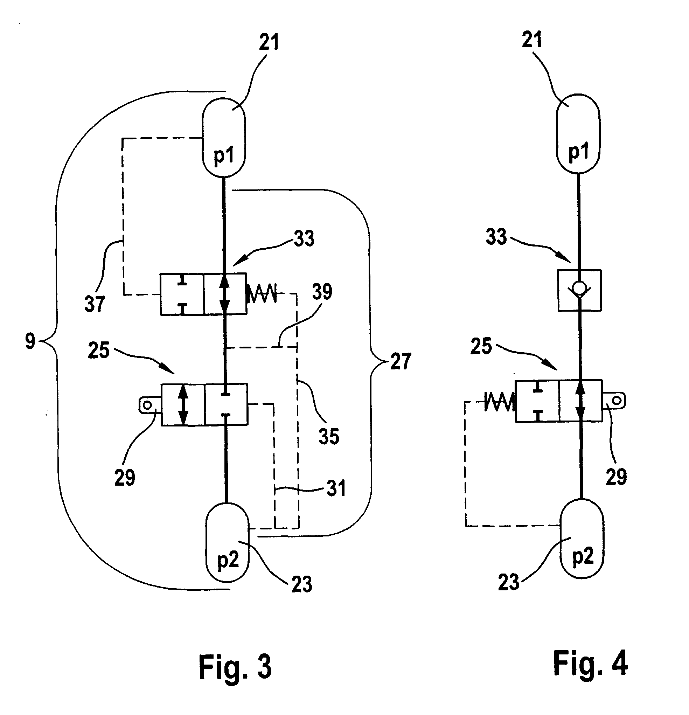

Der Kolben umfasst ein schaltbares Ventil 25 (s. Fig. 3 - 9), das ein nicht dargestelltes Strömungsverbindungssystem 27 blockiert oder freischaltet, wobei das schaltbare Ventil über einen Auslösestößel 29 in Verbindung mit der Auslöseeinrichtung 11 angesteuert werden kann. Im blockierten Zustand des Strömungsverbindungssystems wird die Kolbenstange von den Kräften innerhalb der Gasfeder festgehalten. Der momentane Druck p1 im kolbenstangenseitigen Arbeitsraum 21 multipliziert mit der Ringraumfläche des Arbeitsraums 21 und der momentane Druck p2 im kolbenstangenfernen Arbeitsraum 23 multipliziert mit der gesamten Kolbenfläche stellen gleichgroße entgegengesetzt gerichtete Kräfte dar. Folglich muss der Druck im kolbenstangenseitigen Arbeitsraum aufgrund der kleineren druckbeaufschlagten Fläche größer sein als der Druck p2. Wird das schaltbare Ventil 25 in eine Durchlass-Stellung gebracht, so findet ein Druckausgleich statt, wobei ein geringfügiger Druckunterschied zwischen den Arbeitsräumen 21; 23 aufgrund der Drosselwirkung innerhalb des Strömungsverbindungssystems auftreten kann.

Der Druckunterschied zwischen den beiden Arbeitsräumen wird, wie vorstehend beschrieben, durch die Flächenverhältnisse der druckbeaufschlagten Flächen bestimmt. Wird die Gasfeder belastet, d. h. der kolbenstangenferne Arbeitsraum 23 wird durch die in Einfahrrichtung wirkende Kolbenstange stärker komprimiert, dann ändert sich das Druckverhältnis abweichend von den druckbeaufschlagten Flächen. Je nach Querschnittsfläche der Kolbenstange, die den Druckunterschied zwischen den beiden Arbeitsräumen bestimmt, tritt der Fall in Abhängigkeit der Belastung ein, dass der kolbenstangenferne Arbeitsraum einen größeren Druck aufweist als der kolbenstangenseitige.

Die Figur 3 zeigt ein Ersatzschaubild der Gasfeder 9 nach Fig. 2. Die beiden Speicher stellen die Arbeitsräume 21; 23 dar und das schaltbare Ventil 25 in der Ausführung eines 2/2-Wegeventils wird über eine Steuerleitung 31, ausgehend vom Druck im kolbenstangenfernen Arbeitsraum 23, in Schließrichtung vorgespannt. Mit dem Auslösestößel 29 kann das schaltbare Ventil 25 willkürlich betätigt werden.

In dem Strömungsverbindungssystem zwischen den beiden Arbeitsräumen ist ein Lastschaltventil 33 in der Bauform eines 2/2-Wegeventils angeordnet, das über einen Steuerdruckanschluss 35 in eine Durchlass-Stellung bewegt werden kann. Das Lastschaltventil kann über beliebige Steuerkräfte in die Schließstellung gebracht werden. Neben einer sicherlich auch elektromagnetischen Lösung kann man auch die Steuerkraft einer Feder einsetzen. Es ist aber auch möglich, dass das Lastschaltventil einen zweiten Steuerdruckanschluss 37 aufweist, der mit dem kolbenstangenseitigen Arbeitsraum 21 in Verbindung steht.

Damit setzt folgende Arbeitsweise der beiden Ventile 25; 33 ein. Im unbelastete Zustand der Gasfeder ist der Druck p1 im kolbenstangenseitigen Arbeitsraum 21 größer als der Druck p2 im kolbenstangenfernen Arbeitsraum 23 . Folglich bleibt das mit zwei Steuerdruckanschlüssen 35; 37 ausgestattete Lastschaltventil 33 in der Blockierstellung. Wird das schaltbare Ventil von dem Anwender der Auslöseeinrichtung in die Durchlass-Stellung gebracht, dann kann das Druckmedium nur in einem Strömungskanal 39 bis zum Lastschaltventil einen Arbeitsdruck aufbauen. Die beiden Arbeitsräume bleiben weiterhin getrennt.

Für das Anwendungsbeispiel der Gasfeder an einer Rückenlehne stellt sich der Effekt ein, dass die sitzende Person, deren Rücken die Rückenlehne nicht belastet, z. B. weil sie gebeugt sitzt, keine Rückenlehnenverstellung vornehmen und folglich auch kein unangenehmes Anschlagen der Rückenlehne am Rücken auftreten kann.

Wird dagegen die Rückenlehne belastet, dann steigt das Druckniveau im kolbenstangenfernen Arbeitsraum 23 über das Druckniveau im kolbenstangenseitigen Arbeitsraum 21, so dass das Lastschaltventil 33 in die Durchlass-Stellung gebracht wird. Betätigt man nun das schaltbare Ventil 25 , dann ist das gesamte Strömungsverbindungssystem 27 zwischen den Arbeitsräumen 21; 23 geöffnet und die Kolbenstange 15 kann ausfahren oder bezogen auf den Anwendungsfall, die Rückenlehne kann sich in Richtung des Rückens der sitzenden Person bewegen. Über das Lastschaltventil kann "sensiert" werden, ob die Person mit einer ausreichenden Kraft an der Rückenlehne angelehnt ist, um das unangenehme Anschlagen zu verhindern. Mit dem einseitigen Steuerdruckanschluss vom kolbenstangenfernen Arbeitsraum in Verbindung mit einer Rückstellfeder ist derselbe Effekt erzielbar, doch könnte es bei sehr großen Temperaturschwankungen aufgrund des Temperaturverhaltens der Gasfüllung zu gewissen Ungenauigkeiten bei der Bestimmung der Mindestbelastung kommen.

Das Ersatzschaubild nach der Fig. 4 entspricht in seiner Funktionsweise der Ausführung nach der Fig. 3. Der Unterschied besteht in der Ausgestaltung des Lastschaltventils 33, das von einem einfachen Rückschlagventil gebildet wird. Man nutzt die Bedingung für das Vorhanden sein einer Belastung auf die Gasfeder aus, dass der Druck p2 im kolbenstangenfernen Arbeitsraum größer sein muss als im kolbenstangenseitigen 21. Ist der Druck p2 kleiner, so wird das Rückschlagventil von dem Druck p1 im kolbenstangenseitigen Arbeitsraum 21 verschlossen. Insgesamt vereinfacht sich der Ventilaufbau im Vergleich zur Variante nach Fig. 3.

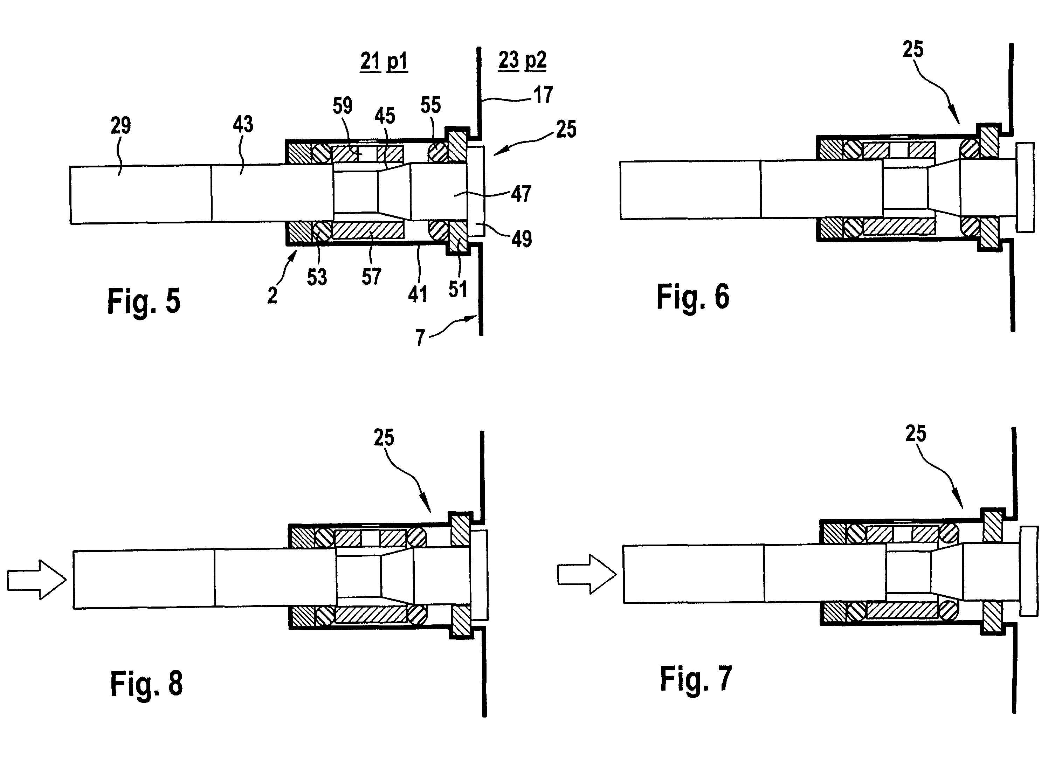

Mit den Fig. 5 bis 8 soll die technische Umsetzung der Erfindung an einem Ausführungsbeispiel erklärt werden. Der Kolben 17 ist in allen vier Figuren als ein Trennstrich dargestellt. Auf die Darstellung der Kolbenstange wurde zu Gunsten des Auslösestößels 29 verzichtet, wobei der kolbenstangenseitige Arbeitsraum 21 links von dem Trennstrich beginnt.

Das schaltbare Ventil 25 verfügt über ein Gehäuse 41 , das mit der Kolbenstange 15 fest verbunden ist. Innerhalb des Gehäuses ist der Auslösestößel 29, der in einen Auslösestößel und einen Ventilstößel 43 unterteilt ist, axial beweglich angeordnet. Der Ventilstößel verfügt über eine Einschnürung 45 , die in Richtung des kolbenstangenfernen Arbeitsraums wieder in einen gleichmäßig zylindrischen Abschnitt 47 übergeht, dem sich eine Anschlag 49 anschließt. Auf den Anschlag mit der druckbeaufschlagtem Querschnitt des zylindrischen Abschnitts 47 wirkt der momentane Betriebsdruck p2 im kolbenstangenfernen Arbeitsraum in Schließstellung des Ventilstößels, der dann an einer ortsfesten Haltescheibe 51 des Ventilgehäuses anliegt. Die Haltescheibe kann an ihrem Innen- und Außendurchmesser vom Druckmedium umströmt werden. Damit keine Leckagen entstehen können, verfügt das schaltbare Ventil über eine ortsfeste Dichtung 53 und über eine zumindest über einen Umfangsbereich axial bewegliche Dichtung 55, im weiteren Schaltdichtung genannt. Zwischen den beiden Dichtungen ist eine Ventilhülse 57 angeordnet. Man kann in der Ventilhülse 57 stirnseitig Aussparungen vorsehen, in die dann ein Umfangsbereich der Dichtung verformt werden kann. Das Strömungsverbindungssystem 27 erstreckt sich vom kolbenstangenfernen Arbeitsraum entlang der Haltescheibe bis zur Schaltdichtung und von dort aus über die Einschnürung durch mindestens eine Radialöffnung 59 innerhalb des Gehäuses 41.

In der Fig. 5 ist der Betriebszustand dargestellt, bei dem das schaltbare Ventil 25 mit seinem Ventilstößel geschlossen ist, d. h. an der Haltescheibe anliegt und auf die Gasfeder keine Belastung einwirkt. Der momentane Betriebsdruck zwischen der Schaltdichtung 55 und der Haltescheibe 51 ist entsprechend dem Druck im kolbenstangenfernen Arbeitsraum kleiner als der momentane Betriebsdruck zwischen der Radialöffnung 59 und der Schaltdichtung 55. Folglich wird die Schaltdichtung, die an ihrem Innen- und Außendurchmesser eine Dichtfunktion ausübt aufgrund des höheren Druckniveaus im kolbenstangenseitigen an der Haltescheibe anliegen und sich damit außerhalb der Einschnürung 45 im Ventilstößel befinden. Damit ist das Strömungsverbindungssystem zwischen den beiden Arbeitsräumen 21; 23 vollständig blockiert.

In der Fig. 6 wird der Fall dargestellt, bei dem ohne äußere Belastung das schaltbare Ventil 25 betätigt wird. Zwar hebt der Ventilstößel 43 mit seinem Anschlag 49 von der Haltescheibe ab, doch wird die Schaltdichtung 55 weiterhin von dem höheren Druck im kolbenstangenseitigen Arbeitsraum gegen die Haltescheibe gedrückt, wobei sich die Schaltdichtung auf dem Ventilstößel in dem zylindrischen Abschnitt 47 befindet und damit am Innen- und Außendurchmesser die beiden Arbeitsräume 21; 23 abdichtet. Das Druckmedium kann dann zwar, um im Sprachgebrauch der Ersatzschaubilder nach den Fig. 3 und 4 zu bleiben über den Strömungskanal bis zur Schaltdichtung strömen. Damit ist die Kolbenstangenbewegung weiterhin blockiert. Die Schaltdichtung 55 in Verbindung mit dem zylindrischen Abschnitt 47 des Ventilstößels 43 bildet das Lastschaltventil 33, das zusammen mit dem schaltbaren Ventil 25 eine Baueinheit darstellt.

In der Fig. 7 wird durch den Pfeil eine äußere Belastung auf die Kolbenstange der Gasfeder 9 symbolisiert. Die Druckverhältnisse in den Arbeitsräumen 21; 23 ändern sich dahingehend, dass der Druck p2 im kolbenstangenfernen Arbeitsraum im Vergleich zum kolbenstangenseitigen Arbeitsraum ansteigt. Ist der Druck p2 im kolbenstangenfernen Arbeitsraum größer als im kolbenstangenfernen, dann wird die Dichtung von dem Druck p2 im kolbenstangenfernen Arbeitsraum in Richtung der Einschnürung verschoben und das Druckmedium kann bei geöffnetem Schaltventil 25 in den kolbenstangenseitigen Arbeitsraum übertreten, so dass die Kolbenstange eine Ausfahrbewegung ausführen kann.

Der Fall, dass die Gasfeder zwar belastet, das schaltbare Ventil jedoch nicht betätigt wird, ist in der Fig. 8 dargestellt. Der zylindrische Abschnitt 47 des Ventilstößels 43 von der Einschnürung 45 bis zur Haltescheibe 51 ist derart lang dimensioniert, dass die Schaltdichtung aufgrund der Druckverhältnisse zwar eine Schaltbewegung in Richtung der Durchlass-Stellung ausführen kann, jedoch an der Ventilhülse anliegt und noch nicht die Einschnürung erreicht, die für eine Durchlass-Stellung des Strömungsverbindungssystems notwendig ist.

Die Variante der Erfindung nach den Figuren 5 bis 8 entspricht in ihrer Wirkungsweise dem Ersatzschaubild 4, da die Schaltdichtung die Funktion eines Rückschlagventils aufweist und damit das gesamte Lastschaltventil als Rückschlagventil anzusehen ist.

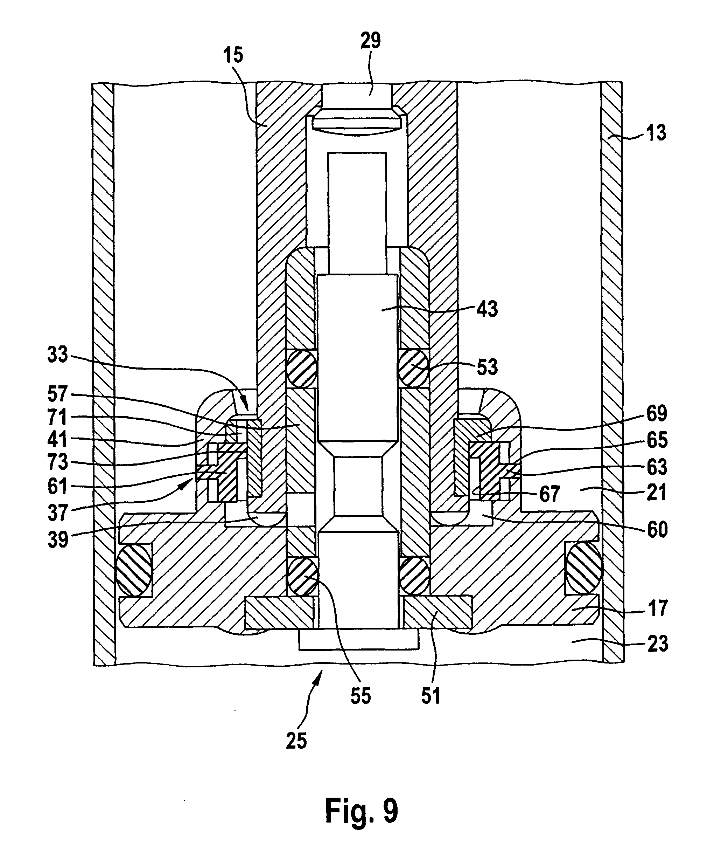

Mit der Fig. 9 wird das Ersatzschaubild nach Fig. 3 realisiert. Abweichend zu den Fig. 5 bis 8 ist die der Haltescheibe 51 zugeordnete Dichtung 55 zwischen der Ventilhülse 57 und der Haltescheibe 51 verspannt und dichtet am Innen- und am Außendurchmesser ab. Ob die Vorder- und Rückseite der Dichtung von den Arbeitsdrücken beaufschlagt wird, spielt keine Rolle.

Der Strömungskanal 39 zwischen dem schaltbaren Ventil 25 und dem Lastschaltventil 33 mündet in einen Ringraum 60 . Das Lastschaltventil ist als radial elastischer Ring 61 ausgeführt, der mittels Dichtstifte 63, die in Öffnungen 65 des Gehäuses 41 eingreifen vom Druck p1 im kolbenstangenseitigen Arbeitsraum 21 beaufschlagt wird. Die Stirnflächen in Verbindung mit den Öffnungen stellen einen Steuerdruckanschluss 37 für das Lastschaltventil 33 dar. Eine innenliegende Mantelfläche 67 des elastischen Rings 61 , die dem Ringraum 60 zugewandt ist, bildet den zweiten Steuerdruckanschluss 35, der dem ersten in seiner Wirkrichtung entgegengesetzt ist. In einem Ventilring 69 ist eine Anzahl von Ventilöffnungen 71 eingearbeitet, die von einem umlaufenden Ventilsteg 73. des elastischen Ringes 61 in Abhängigkeit der Druckverhältnisse im Ringraum 60 und an den Stirnflächen der Dichtstifte 63 freigegeben wird, indem der elastische Ring eine radiale Aufweitbewegung ausführen kann und der Ventilsteg 73 die Ventilöffnungen 71 freigibt.

Die Anwendung des Lastschaltventils beschränkt sich nicht auf das beschriebene Beispiel. Des weiteren ist die Anordnung des Lastschaltventils keineswegs im Zusammenhang mit einem Kolben beschränkt.

In den dargestellten Ausführungsvarianten werden die Öffnungskräfte über die Flächenverhältnisse zwischen den Arbeitsräumen und den Flächenverhältnissen an den Steuerdruckanschlüssen bestimmt. Durch den Einsatz von Federn in den Arbeitsräumen und/ oder am Lastschaltventil, beispielsweise, wenn zwischen der Schaltdichtung 55 und der Haltescheibe 51 ein Federelement eingesetzt wird oder der elastische Ring 61 von einer Feder in Radialrichtung vorgespannt wird, kann man die Öffnungskräfte des Lastschaltventils von den Flächenverhältnissen unabhängig bestimmen.

## Patentansprüche

1. Blockierbare Gasfeder, umfassend einen Zylinder (13), der von einem Kolben (17) an einer Kolbenstange (15) in zwei Arbeitsräume (21, 23) unterteilt wird, die mit einem unter Druck stehenden Druckmedium gefüllt sind, wobei in einem Strömungsverbindungssystem (27) zwischen den Arbeitsräumen (21, 23) ein schaltbares Ventil (25) angeordnet ist, das dieses Strömungsverbindungssystem (27) in Abhängigkeit von der Stellung eines Ventilelementes öffnet,
**dadurch gekennzeichnet,**
**dass** in dem Strömungsverbindungssystem (27) in Reihe zum schaltbaren Ventil (25) ein Lastschaltventil (33) angeordnet ist, das unterhalb einer definierten Belastung auf die Gasfeder (9) das gesamte Strömungsverbindungssystem (27) unabhängig von der Schaltstellung des schaltbaren Ventils (25) blockiert.

2. Gasfeder nach Anspruch 1;
**dadurch gekennzeichnet,**
**dass** das Lastschaltventil (33) einen Steuerdruckanschluss (35; 37) zu einem Arbeitsraum (21; 23) aufweist.

3. Gasfeder nach Anspruch 2,
**dadurch gekennzeichnet,**
**dass** das Lastschaltventil (33) für jeden der beiden Arbeitsräume (21; 23) einen Steuerdruckanschluss (35; 37) aufweist, wobei die Steuerdrücke entgegengesetzt gerichtet sind.

4. Gasfeder nach einem der Ansprüche 1 bis 3,
**dadurch gekennzeichnet,**
**dass** das Lastschaltventil (33) und das schaltbare Ventil (25) zu einer Baueinheit zusammengefasst sind.

5. Gasfeder nach Ansprüchen 1 bis 4,
**dadurch gekennzeichnet,**
**dass** ein Strömungskanal (39) des schaltbaren Ventils (25) als Abschnitt des Strömungsverbindungssystems (27) am Steuerdruckanschluss (35) des Lastschaltventils (33) mündet.

6. Gasfeder nach einem der Ansprüche 1 bis 5,
**dadurch gekennzeichnet,**
**dass** das Lastschaltventil (33) in der Bauform eines Rückschlagventils ausgeführt ist.

7. Gasfeder nach Anspruch 4,
**dadurch gekennzeichnet,**
**dass** das schaltbare Ventil (25) ein Ventilelement aufweist, das an seinen beiden Steuerdruckseiten jeweils von einem Betriebsdruck eines Arbeitsraums (21; 23) beaufschlagt wird.

8. Gasfeder nach Anspruch 7,
**dadurch gekennzeichnet,**
**dass** das Ventilelement von einer Dichtung (55) gebildet wird.

9. Gasfeder nach Anspruch 8; **dadurch**
**gekennzeichnet,**
**dass** die Dichtung (55) zumindest auf einem Umfangsabschnitt axial beweglich ausgeführt ist.

## Claims

1. Gas spring which can be inhibited, comprising a cylinder (13), which is subdivided by a piston (17) on a piston rod (15) into two working spaces (21, 23) which are filled with a hydraulic medium which is under pressure, in which gas spring an on-off valve (25), which opens a flow connection system (27) as a function of the position of a valve element, is arranged in this flow connection system (27) between the working spaces (21, 23), **characterized in that** a load-dependent valve (33) is arranged in series with the on-off valve (25) in the flow connection system (27) which, below a defined load on the gas spring (9), inhibits the complete flow connection system (27) independently of the switching position of the on-off valve (25).

2. Gas spring according to Claim 1, **characterized in that** the load-dependent valve (33) has a control pressure connection (35; 37) to a working space (21; 23).

3. Gas spring according to Claim 2, **characterized in that** the load-dependent valve (33) has a control pressure connection (35; 37) for each of the two working spaces (21; 23), the control pressures acting in opposite directions.

4. Gas spring according to one of Claims 1 to 3, **characterized in that** the load-dependent valve (33) and the on-off valve (25) are combined to form a structural unit.

5. Gas spring according to one of Claims 1 to 4, **characterized in that** a flow duct (39) of the on-off valve (25) emerges, as a section of the flow connection system (27), at the control pressure connection (35) of the load-dependent valve (33).

6. Gas spring according to one of Claims 1 to 5, **characterized in that** the load-dependent valve (33) is embodied in the structural form of a non-return valve.

7. Gas spring according to Claim 4, **characterized in that** the on-off valve (25) has a valve element, which is respectively exposed on its two control pressure sides to an operating pressure of a working space (21; 23).

8. Gas spring according to Claim 7, **characterized in that** the valve element is formed by a seal (55).

9. Gas spring according to Claim 8, **characterized in that** the seal (55) is embodied so that it can be moved axially, at least on a section of its periphery.

## Revendications

1. Amortisseur à gaz blocable, comprenant un cylindre (13), qui est divisé par un piston (17) sur une tige de piston (15) en deux chambres de travail (21, 23), qui sont remplies d'un fluide comprimé sous pression, dans lequel une soupape commutable (25) est disposée dans un réseau de raccordement d'écoulement (27) entre les chambres de travail (21, 23), et ouvre ce réseau de raccordement d'écoulement (27) en fonction de la position d'un élément de soupape, **caractérisé en ce qu'**une soupape de commutation de charge (33) est disposée en série avec la soupape commutable (25) dans le réseau de raccordement d'écoulement (27), qui bloque tout le réseau de raccordement d'écoulement (27) indépendamment de la position de la soupape commutable (25), en dessous d'une charge définie sur l'amortisseur à gaz (9).

2. Amortisseur à gaz selon la revendication 1, **caractérisé en ce que** la soupape de commutation de charge (33) présente un raccord de pression de commande (35; 37) vers une chambre de travail (21; 23).

3. Amortisseur à gaz selon la revendication 2, **caractérisé en ce que** la soupape de commutation de charge (33) présente un raccord de pression de commande (35; 37) pour chacune des deux chambres de travail (21; 23), les pressions de commande étant dirigées dans des directions opposées.

4. Amortisseur à gaz selon l'une quelconque des revendications 1 à 3, **caractérisé en ce que** la soupape de commutation de charge (33) et la soupape commutable (25) sont réunies en une unité structurelle.

5. Amortisseur à gaz selon les revendications 1 à 4, **caractérisé en ce qu'**un canal d'écoulement (39) de la soupape commutable (25), formant une partie du réseau de raccordement d'écoulement (27), débouche au raccord de pression de commande (35) de la soupape de commutation de charge (33).

6. Amortisseur à gaz selon l'une quelconque des revendications 1 à 5, **caractérisé en ce que** la soupape de commutation de charge (33) est réalisée sous la forme d'une soupape anti-retour.

7. Amortisseur à gaz selon la revendication 4, **caractérisé en ce que** la soupape commutable (25) présente un élément de soupape, qui est soumis sur chacun de ses deux côtés de pression de commande à une pression de service d'une chambre de travail (21; 23).

8. Amortisseur à gaz selon la revendication 7, **caractérisé en ce que** l'élément de soupape est formé par un joint d'étanchéité (55).

9. Amortisseur à gaz selon la revendication 8, **caractérisé en ce que** le joint d'étanchéité (55) est mobile axialement au moins sur une partie du pourtour.
